# EUROPÄISCHE PATENTANMELDUNG

(11) **EP 0 548 697 A1**
(43) Veröffentlichungstag der Anmeldung: **30.06.1993**
(21) Anmeldenummer: 92121092.8
(22) Anmeldetag: 10.12.1992
(51) Int. Cl.: G05B 19/12

(54) **Haushaltsgerät und Behandlungsgut**

(30) Priorität: 20.12.1991 DE 4142463
(71) Anmelder: BOSCH-SIEMENS HAUSGERÄTE GmbH, D-81669 München (DE)
(72) Erfinder: Schomaker, Klaus, Dipl.-Ing., W-8098 Pfaffing (DE); Lüdtke, Jan-Holger, Dipl.-Ing., W-1000 Berlin 26 (DE); Lüdtke, Frank-Rüdiger, Dipl.-Ing., W-1000 Berlin 27 (DE); Tröger, Thomas, Dipl.-Ing., W-1000 Berlin 41 (DE); Liese, Frank, Dr.rer.nat., W-1000 Berlin 30 (DE)

(57) **Zusammenfassung**

Bei einem Haushaltsgerät soll das Einspeichern der Programme erleichtert und verbessert werden.

Gemäß der Erfindung besitzt das Haushaltsgerät einen Sensor (4) zum Einlesen bzw. Einspeichern der Programme. Entweder ist das Gut selbst mit einer maschinenlesbaren oder in lesbarer Klarschrift gehaltenen Code-Marke (6) versehen, die beim Vorbeiführen an dem Sensor die Daten einer Logik (16) zuführen, wobei letztere über Verstärker (19, 22) die Betriebsorgane (23, 24) des Gerätes (1) schalten.

Durch diese Maßnahme kann eine einwandfreie Zubereitung oder Behandlung des Gutes gewährleistet werden, ohne daß hierzu eine Vielzahl von Schaltelementen vorher betätigt werden müssen.

## Beschreibung

Die Erfindung bezieht sich auf ein Behandlungsgut und auf ein Haushaltsgerät, wie beispielsweise Geschirrspülmaschinen, Waschmaschinen, Wäschetrockner, Mikrowellenherde, Küchenherde, Wäschebügeleisen und Bügelvorrichtungen, aber auch Maschinen zur chemischen Reinigung sind vielfach bekannt. Sie besitzen zumeist Handhaben zum Einstellen der für das zu behandelnde Gut erforderlichen Betriebsweisen der Geräte. Das Vordringen der Elektronik machte eine gezielte Behandlung des Gutes möglich ohne daß hierzu die einzelnen Verfahrensschritte besonders am Haushaltgerät eingestellt werden müssen.

Durch die europäische Patentanmeldung 0 123 099 ist es bekannt, auf dem Armaturenbrett eines elektrischen Haushaltsgerätes eine Behandlungscode anzubringen und diese Code-Marke dann mittels eines elektronischen Griffels abzulesen. Die abgelesenen Daten werden einem Mikroprozessor im Gerät bzw. der Maschine zugeführt, welche nach Betätigung eines Druckknopfschalters mit der Behandlung des Gutes beginnt. Anstelle des optoelektronischen Lesegerätes ist es auch möglich, mit Code-Marken versehene Karten zu verwenden. Diese Karten können in einen Schlitz am Armaturenbrett der Maschine eingeführt werden, wobei die Maschine - wie vor beschrieben - nun den Behandlungsprozeß beginnt.

Durch die vor beschriebene Programmeinstellung an der Maschine wird die Arbeit der Bedienungsperson wesentlich erleichtert. Nachteilig ist es indessen, daß das abgelesene Programm am Armaturenbrett oder die gewählte Karte mit dem Behandlungscode nicht immer der Behandlungsvorschrift für das betreffende Gut entspricht. Auch muß Vorsorge getroffen werden, daß bei einer falschen Behandlungseingabe das falsche Programm gelöscht werden kann.

Es ist somit Aufgabe und Sinn der Erfindung, eine Programmeingabe an einem Haushaltsgerät zu schaffen, welche in der Lage ist, die Art des eingegebenen Gutes zu erkennen und für das spezifische Gut die geeignete Behandlungsart auszuwählen.

Dieses geschieht gemäß der Erfindung dadurch, daß sich an einem gut zugängigen Bereich, vorzugsweise im Bereich der Beschickungstür des Haushaltsgerätes, ein Sensor, z.B. ein optoelektronisches Lesegerät oder ein akustoelektronisches Hörgerät befindet und das zu behandelnde Gut oder die Verpackung des Gutes eine maschinenlesbare Marke trägt, welche beim Einlegen des Gutes in das Haushaltsgerät gelesen wird. Diese gelesenen Daten werden dann vom Lesegerät - wie bekannt - einem Mikroprozessor zugeführt, der die Steuerung des Gerätes übernimmt.

Durch diese erfinderische Ausbildung des Haushaltsgerätes und des Gutes bzw. und/oder seiner Verpackung kann der vorstehende Nachteil überwunden werden. Es ist jetzt möglich, das Haushaltsgerät genau auf die spezifische Art und/oder auf die richtige Behandlungsweise für das eingegebene Gut einzustellen. Fehler in der Behandlung des Gutes sind somit ausgeschlossen.

Am Armaturenbrett des Haushaltsgerätes befindet sich - wie bekannt - ein Start- und Stopschalter, aber auch zusätzlich und gemäß der Erfindung ein Programm-Löschschalter, verbunden mit einer Alarmeinrichtung. Hat die Bedienungsperson ein nicht zum eingelesenen Programm gehörendes Teil in das Haushaltgerät eingelegt, ertönt ein Signal oder das Signal wird optisch angezeigt, die Bedienungsperson kann nunmehr nach Betätigung des Löschschalters das falsch eingegebene Gutteil aus der Maschine oder aus dem Gerät entnehmen.

Auch kann es sein, daß nicht alles Gut, welches in das Haushaltsgerät einzulegen ist, mit einer Code-Marke versehen ist, oder diese Code-Marke ist ausgebleicht, verkratzt oder beschädigt. Es ist gemäß der Erfindung ein weiterer zusätzlicher Schalter oder eine Handhabe vorgesehen, bei dessen Betätigung das zuletzt eingegebene Programm weitergeführt wird.

Denn oft ist es nicht immer möglich, an das gut Code-Marken anzubringen, z.B. bei an zu spülenden Gläsern, Tassen und dgl. In diesem Falle wird die zuletzt genannte Taste gedrückt, welche bei Geschirrspülmaschinen, z.B. für Gläser, Tassen oder Feingeschirr das Programm steuert. Bekanntlich sind Töpfe und dgl. besonders schwer zu spülen, wobei für derartiges Geschirr eine besondere Code-Marke vorgesehen ist. Es muß indessen dem Benutzer überlassen bleiben, ob er beim Spülen von stark verschmutzem Geschirr Gläser und dgl. beifügt, die dann Schaden nehmen können.

Auch Lebensmittel, die beispielsweise in einem Herd oder Mikrowellenherd zubereitet werden, können mit einer Code-Marke versehen sein. Diese Code-Marke trägt in Form eines Bar-Codes oder ggf. auch in Klarschrift die notwendigen Angaben zur Behandlung des Gutes im Herd. Auch andere Lebensmittel können mit einer derartigen Code-Marke versehen sein; z.B. Tiefkühlkost, Gemüse und dgl. Am Herd befindet sich über der Beschickungsöffnung ein Code-Lesegerät. Am Haushaltsgerät befindet sich ein Umschalter, der die Tasten oder Handhaben des Gerätes überbrückt und das Lesegerät der elektromechanischen Einrichtung des Haushaltsgerätes zuschaltet.

Wie schon beschrieben, ist das Haushaltsgerät mit einer Alarmvorrichtung versehen. Diese Alarmvorrichtung zeigt an, daß das Zugeführte Gut nicht in den Behandlungsprozeß des Haushaltsgerätes paßt; z.B. bei einer Waschmaschine, bei der das Programm für Hemden, Bettwäsche, Taschentücher oder dgl. eingestellt ist und nunmehr Wollsocken oder Pullover zugegeben werden, die nicht in das Waschprogramm passen. In diesem Falle ertönt ein Alarmsignal, wobei gleichzeitig Gelegenheit gegeben ist, das falsch eingelegte Gut aus dem Gerät zu entnehmen.

Weitere Einzelheiten der Erfindung sind aus den Zeichnungen ersichtlich, in denen verschiedene Haushaltsgeräte sowie ein Schaltungsdiagramm dargestellt ist. Es zeigen:
- Fig. 1: einen Mikrowellenherd,
- Fig. 2: eine Waschmaschine,
- Fig. 3: eine Geschirrspülmaschine,
- Fig. 4: ein Schaltungsdiagramm und
- Fig. 5: ein Lesegerät, z.B. bei einer Wäschebehandlungsmaschine.

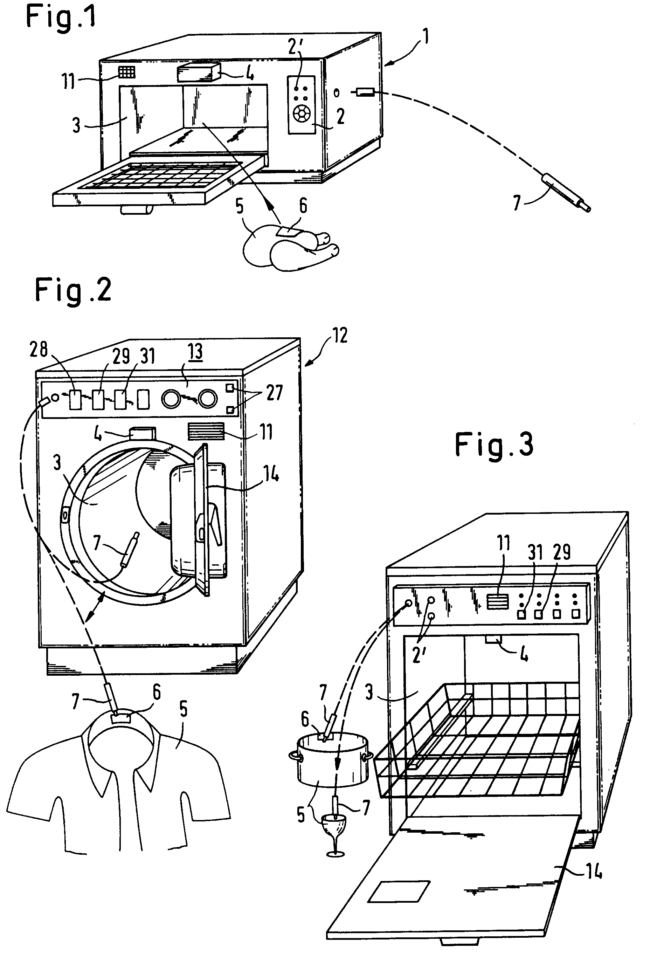

Fig. 1 zeigt einen Mikrowellenherd 1 mit einem bekannten Tastenfeld 2 und Einstellhandhabe mit einer Beschickungsöffnung 3, über welcher ein Lesegerät 4 angeordnet ist. Ein zu garendes und zu grillendes Gutteil 5 trägt eine Code-Marke 6; sie wird beim Einlegen des Gutes in das Haushaltsgerät am Lesegerät 4 vorbeigeführt. Diese Sensorik erfaßt die Kennzeichnung der Marke, welche in maschinenlesbarer Form oder in Klarschrift auf das Gut 5 - oder auf die Verrpackung - angebracht ist. Das eingelesene Kennzeichen wird durch eine elektronische Steuerung zur Optimierung des Zubereitungsprozesses und zur Erleichterung der Bedienung so dem Haushaltsgerät zugeführt. Zusätzlich kann sich am Haushaltsgerät - wie bekannt - auch ein optoelektronischer Griffel 7 befinden, er kann dazu benutzt werden, das Gut-Kennzeichen 6 abzutasten und die gelesene Information dem Haushaltsgerät zuzuführen. Wird beispielsweise ein Gutteil dem Gerät zugeführt, welches nicht dem eingestellten Behandlungsprozeß entspricht, so kann durch Druck einer Taste, z.B. 2' Rücknahme einer erfolgten Registrierung herbeigeführt werden. Sind Gutteile nicht mit einer Code-Marke versehen, so kann durch Druck einer weiteren Taste das Lesegerät abgeschaltet werden, wobei das letzte Programm weitergeführt wird. Wird ein Gutteil dem Haushaltsgerät zugeführt, das in dem eingestellten Betriebszustand des Gerätes nicht bearbeitet werden darf, so wird ein Alarmsignal ausgelöst.

Das zu behandelnde Gut kann mit einem erweiterten Lebensmittel-Kennzeichen versehen sein, so daß das Haushaltsgerät in der Lage ist, für das Gut den optimalen Herstellungsprozeß auszuwählen. Die Code-Marke 6 umfaßt die Zubereitungsart (Mikrowelle, Gas- oder Elektroherd, Umluft, Grill usw.) die Zubereitungstemperatur (Herd-Stufe) Leistung bei Mikrowelle, (Temperatur), die Zubereitungsdauer, das Gewicht des Gutes, das Haltbarkeitsdatum und dgl. derart, daß eine optimale Zubereitungsart im Haushaltsgerät möglich ist. Das Lesegerät und die Marke 6 kann auf den erweiterten Lebensmittelprozeß und auf die optimale Zubereitungsart für das jeweilige Gutteil ausgelegt sein.

Fig. 2 zeigt ein Haushaltsgerät, hier eine Waschmaschine 12; sie besitzt ein Armaturenbrett 13 zum Einstellen des Programms für eine bestimmte Gutart. Auch dieses Haushaltsgerät trägt ein über die Beschickungstür 14 angebrachtes optoelektronisches Lesegerät 4, welches beim Einlegen und Vorbeiführen der Wäsche ermöglicht, eine Code-Marke 6 des Gutes 5 zu lesen. Die gelesenen Daten werden der Steuerung zugeführt, welche nunmehr den Gesamtprozeß zur Behandlung des Gutes 5 innerhalb der Waschmaschine steuert.

Anstelle der hier gezeigten Waschmaschine kann auch ein anderes Wäschepflegegerät treten, z.B. eine Schleuder, ein Bügelgerät, eine Mangel, ein chemisches Reinigungsgerät und dgl., wobei diese Geräte alle mit einer Einrichtung zum Lesen von in maschinenlesbarer Form oder in Klarschrift gegebenen Wäschepflege-Kennzeichen ausgerüstet sind. Sie alle haben die Aufgabe, die Behandlung des Wäschepflegeprozesses zu erleichtern, bzw. die Bedienung zu vereinfachen. Das optoelektronische Lesegerät ist an gut zugänglicher Stelle (z.B. bei Waschmaschinen, Trocknern, Schleudern) im Bereich der Einfüllöffnung eingebaut, so daß die Wäschestücke beim Einlegen an das opto-elektronische Lesegerät vorbeigeführt werden müssen. Die Lesevorrichtung ist mit einer akustischen und/oder optischen Anzeige 30 gekoppelt, die eine korrekt erfolgte Registrierung anzeigt. Ein Bedienungselement, z.B. eine Taste 28, erlaubt die Rücknahme einer erfolgten Registrierung eines Wäschestückes. Die Rücknahme kann sich hierbei auf das letzte Wäschestück beziehen. Sofern ein Wäschestück nicht dem eingestellten Behandlungsprozeß entspricht, wird vom Gerät ein Alarm ausgelöst. Es wird sodann das Wäschestück entnommen und die Löschtaste 29 getätigt, so daß die anderen Wäschestücke dem Behandlungsprozeß wieder angepaßt sind. Vorteilhaft ist es, wenn das Haushaltsgerät 1 eine weitere Taste 30 (Schalter) besitzt, bei dessen Betätigung die Wirkung des Lesegerätes 4 unterbrochen wird, bzw. das eingestellte Programm fortgesetzt wird. Das kann notwendig sein bei schlecht leserlichen Gut-Marken 5 oder wenn das Gut keine Marke 6 trägt. Der die Waschmaschine steuernde Mikroprozessor hat Programme für Kochwäsche, Buntwäsche, pflegeleichte Wäsche, Wolle, Gardinen, hell und dunkel, in der Auswahl. Für verschiedene Wäschearten ist eine Begrenzung der Waschtemperatur vorgesehen. So ist es beispielsweise bei Kochwäsche möglich, mit hoher Temperatur zu arbeiten, hingegen bei Wolle mit wesentlich geringerer Temperatur. Auch die Flottenmenge, die Waschzeit, die Dauer der mechanischsen Behandlung, das Schleudern, das Spülniveau und die Spülzeiten sollen der jeweiligen Wäscheart angeglichen sein. Auch hierfür besitzt der Mikroprozessor die notwendigen Begrenzungen für das Programm. Bei Waschgeräten muß ggf, auch das Waschmittel dosiert werden. Bei Waschgeräten mit automatischer Dosierung ist es vorteilhaft, hierzu auch die Dosiermechanik zu beeinflussen. Das Waschprogramm ist so ausgelegt, daß alle Phasen des Programms elektronisch steuerbar sind.

Auch bei einem Wäschetrockner ist es erforderlich, das Programm so auszulegen, daß eine Begrenzung der Trockentemperatur, eine Begrenzung der Mechanik, eine Anzeige über die Programmdauer sowie eine Regulierung des Luftstromes gegeben sind.

Bei chemischen Reinigungsgeräten ist es möglich, auf optoelektronischem Wege eine Vorsortierung des Gutes herbeizuführen sowie z.B. nicht mehr zuzuordnende Wäschestücke zu identifizieren und dem Benutzer zukommen zu lassen.

Anstelle des optoelektronischen Lesegerätes ist es auch möglich, die Pflegehinweise für die Wäsche durch eine Spracheingabe herbeizuführen.

Auch beim Bügeln von Wäschestücken ist ein Lesegerät zweckmäßig, hier ist eine automatische Einstellung der Bügeltemperatur gegeben. Ist die Temperatur für ein Gutteil überschritten, ertönt ein Signal. Auch kann die Empfehlung Dampf benutzen zweckmäßig sein.

Das in Fig. 3 dargestellte Spülgerät ist ebenfalls mit einem elektronischen Leser 4 ausgerüstet. Es kann - wie bekannt - auch im Eingabefall benutzt werden, mit einem optoelektronischen Griffel 7, mit welchem die am Geschirr angebrachte Code-Marke 6 lesbar ist. Die Sensorik 4 ist an gut zugänglicher Stelle im Bereich der Fronttür eingebaut, so daß das Spülgut zum Einlesen daran vorbeigeführt werden muß. Die Lesevorrichtung ist mit einer akustischen und/oder optischen Anzeige gekoppelt, die eine korrekt erfolgte Registrierung anzeigt. Durch Bedienungselemente, z.B. Tasten 2' kann eine Erfassung eines Spülgutes zurückgenommen werden. Ferner ist es möglich, z.B. durch Druck auf die Taste 30 das Lesegerät 4 für weiteres Spülgut unwirksam zu machen, z.B. bei Gläsern, die nicht mit einer Code-Marke versehen werden können. Das Programm wird entsprechend der letzten gelesenen Guteingabe und nach Drücken der Start-Taste begonnen und fortgesetzt. Auch das Spülgerät besitzt optische und/oder akustische Melder 11, der anzeigt, daß dieses oder jenes Spülgut beim eingelesenen Behandlungsprogramm nicht bearbeitet werden darf. Auch für das Spülgerät ist der Mikroprozessor so eingerichtet, daß für ein bestimmtes Spülgut die Spülzeiten, die Temperatur, ggf. auch der Energieverbrauch, die Optimierung von chemischen Zusätzen und des Sprüharmdruckes und dgl. dem für das Gut festgelegten Spülprogramm entsprechen.

Das optoelektronische Lesegerät kann anhand der auf dem Gut angebrachten Code-Marke erkennen, das Material des Spülgutes (z.B. Topf, Glas), das Volumen sowie die Masse des Spülgutes. Anhand dieser Daten ist es möglich, den Spülprozeß zu optimiern.

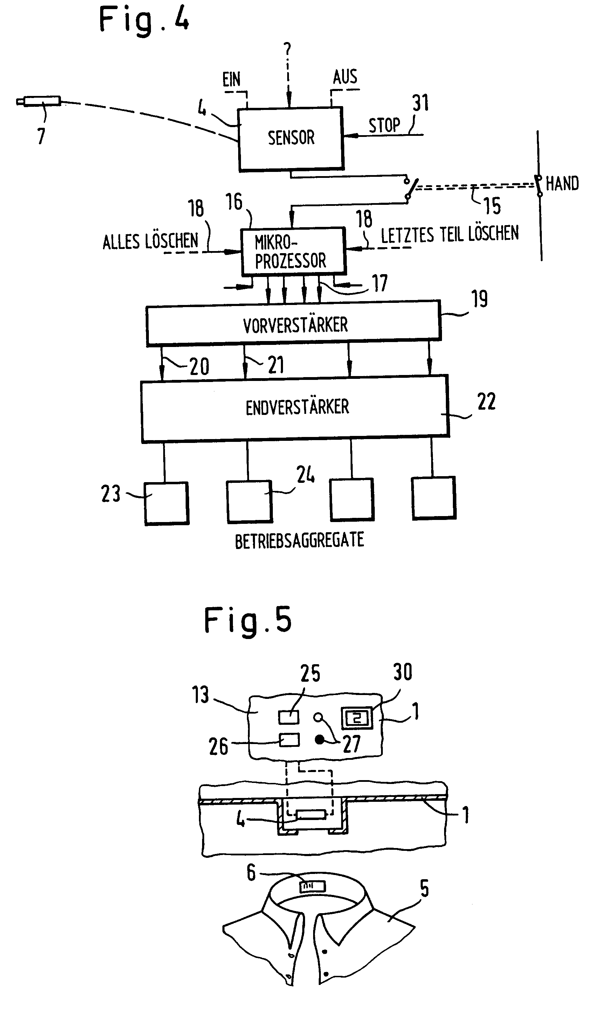

Die Fig. 4 zeigt in einem Schaltdiagramm den Aufbau der Steuerung.

Der Sensor 4 besteht entweder aus dem optoelektronischen Lesegerät ggf. auch - wie bekannt - aus einem optoelektronischen Griffel 7. Der Sensor 4 ist entweder mittels eines Schalters 31 abschaltbar oder in das Haushaltsgerät einklappbar, derart, daß er nicht mehr in der Lage ist, das eingelegte Gut zu registrieren. Es können jetzt z.B. bei Geschirrspülmaschinen Gläser, Feingeschirr und dgl. in die Maschine eingegeben werden, ohne daß eine Änderung des Programmes erfolgt, wenn vorher der Programm-Stoppschalter 30 betätigt wurde. Die vom Sensor 4 kommenden Daten laufen über einen Umschalter 15, der eine Umschaltung des Gerätes von herkömmlicher Steuerung auf automatische Steuerung ermöglicht, zu einer Logik in einem Mikroprozessor 16. Dieser Mikroprozessor besitzt mehrere Ausgänge 17, die den verschiedenen Programmabläufen entsprechen. Außerdem besitzt der Mikroprozessor einen Ausgang für Alarm, wenn also ein eingegebenes Gutteil nicht dem eingestellten Behandlungsprozeß entspricht, wird ein Alarm ausgelöst, wobei nach Druck auf eine Taste der Mikroprozessor entweder alles löscht oder nur das letzte Teil einer Löschung unterzieht. Dies ist durch Pfeile 18 am Mikroprozessor 16 angezeigt. Die Daten des Mikroprozessors werden einem Vorverstärker 19 zugeführt, wobei die Eingänge 20, 21 usw. den Programmen entsprechen. Die Daten des Vorverstärkers gelangen zu einem Endverstärker 22, welcher die einzelnen Betriebsorgane des Gerätes 23, 24 schaltet.

In Fig. 5 ist dargestellt, wie beim Einlesen eines Gutteiles 5 der Sensor, hier das Lesegerät 4, außer Betrieb gesetzt werden kann. Oft sind Gutteile nicht mit Code-Marken versehen, z.B. Gläser, Teller, Wäschestücke oder auch Tafelgeschirr, oder sie sind schlecht lesbar. In diesem Falle wird einer der Schalter 26 auf dem Armaturenbrett 13 betätigt, dann leuchtet eine Signallampe, z.B. 27 auf und das im Programmfenster 30 angezeigte Programm wird festgehalten. Es liegt jetzt an der Bedienungsperson des Gerätes, daß die nachfolgend eingegebenen Güter 5 sich in den Behandlungsrahmen, bzw. in das Programm einreihen. Damit ist eine Einstellung durch das erste Einlesen des Gutteiles 5 spezieller auf die jeweilige Gutart gegeben.

## Patentansprüche

1. Haushaltsgerät zur automatischen Behandlung eines Gutes, **dadurch gekennzeichnet,** daß in dem Haushaltsgerät (1) in einem gut zugängigen Bereich, vorzugsweise über der Beschickungstür (3), sich ein Sensor (4) befindet und das zu behandelnde Gutteil (5) eine maschinenlesbare Marke (6) trägt, der Sensor die von der Marke stammenden Signale einer mit Verstärkern ausgerüsteten Logik (16) zuführt, wobei die Verstärker (19, 22) die Betriebsorgane (23, 24) der Maschine bzw. des Haushaltsgerätes steuern.

2. Haushaltsgerät nach Anspruch 1, dadurch gekennzeichnet, daß die die Code-Marke (6) lesende Einrichtung (4) einen Mikroprozessor (16) beeinflußt, wobei der Mikroprozessor mittelbar über Verstärkerschaltungen (19, 22) die einzelnen Betriebsschalter (23, 24) des Haushaltgerätes (1) schaltet.

3. Haushaltsgerät nach Anspruch 1, dadurch gekennzeichnet, daß das Haushaltsgerät (1) einen Programmanzeiger (27) aufweist.

4. Haushaltsgerät nach Anspruch 1, dadurch gekennzeichnet, daß das Haushaltsgerät (1) einerseits ein die Programme zur Behandlung des Gutes lesendes Lesegerät (4) sowie einen Mikroprozessor (16) mit Verstärkern (19, 22) und mittels eines Schalters (15) auf bekannten Betrieb umstellbar ist.

5. Haushaltsgerät nach Anspruch 1, dadurch gekennzeichnet, daß das Haushaltsgerät (1) einen Hörsensor (4) aufweist, wobei der Sensor einer Logik (16) mit Verstärkerelementen (20, 21) sowie Programmschalter (23, 24) aufweist.

6. Haushaltsgerät nach Anspruch 1, dadurch gekennzeichnet, daß das Haushaltsgerät (1) eine Alarmvorrichtung (11) besitzt, wobei die Alarmvorrichtung dann in Tätigkeit tritt, wenn das in das Haushaltsgerät eingelegte Gut (5) nicht dem eingestellten Behandlungsprogramm entspricht.

7. Haushaltsgerät nach Anspruch 1, dadurch gekennzeichnet, daß das Haushaltsgerät 1 einen Schalter oder eine Taste (29) besitzt, welche bei Rücknahme des Gutteiles gedrückt wird und eine weitere Taste oder Schalter (30) aufweist, bei dessen Betätigung der Sensor (4) unwirksam wird.

8. Haushaltsgerät nach Anspruch 1, dadurch gekennzeichnet, daß das Haushaltsgerät (1) eine Drucktaste und/oder Schalthandhabe (2') aufweist, bei deren Betätigung das letzte und/oder alle bisher eingelesenen Programme gelöscht werden können.
